# FASCICULE DE BREVET EUROPEEN

(11) **EP 3 017 612 B1**
(45) Date de publication et mention de la délivrance du brevet: **20.02.2019**
(21) Numéro de dépôt: 14736750.2
(22) Date de dépôt: 03.07.2014
(51) Int. Cl.: G06Q 10/08, G06Q 30/02, G06K 19/07, H04L 29/08, H04W 4/80, H04W 4/00, G06Q 20/32, G06Q 30/06, H04M 1/725

(54) **PROCÉDÉ DE COMMUNICATION D'INFORMATION À PARTIR D'IDENTIFIANTS DE PÉRIPHÉRIQUES RADIOFRÉQUENCES**
VERFAHREN ZUR ÜBERMITTLUNG VON INFORMATIONEN AUS FUNKFREQUENZ-PERIPHERIEGERÄTEIDENTIFIKATOREN
METHOD FOR COMMUNICATING INFORMATION FROM RADIO FREQUENCY PERIPHERAL IDENTIFIERS

(30) Priorité: 03.07.2013 FR 1356499
(43) Date de publication de la demande: 11.05.2016
(73) Titulaire: Store Electronic Systems, 92000 Nanterre (FR)
(72) Inventeur: ROBIN, François, F-75116 Paris (FR); BOTTINE, Philippe, F-92100 Boulogne-Billancourt (FR)
(74) Mandataire: Regimbeau
(86) Numéro de dépôt international: PCT/EP2014/064223
(87) Numéro de publication internationale: WO 2015/001039

(56) Documents cités:
- WO-A1-2006/035315
- US-A1- 2007 016 479

## Description

### DOMAINE TECHNIQUE GENERAL ET CONTEXTE DE L'INVENTION

La présente invention concerne de manière générale l'affichage d'informations dans une surface de vente.

L'affichage d'informations relatives à des articles présentés à la vente dans une surface de vente se fait généralement au moyen d'étiquettes affichant notamment le prix de l'article auquel une étiquette est associée, ainsi que d'autres informations telles que le prix au poids, etc...

La nécessité de disposer d'un affichage d'informations à jour a justifié l'implantation dans de nombreuses surfaces de vente d'étiquettes électroniques de gondole, dans lesquels l'affichage d'informations sur un écran de ces étiquettes électroniques de gondole est commandé à distance.

L'utilité de tels système est essentiellement de permettre, au niveau des rayonnages d'un site tel qu'un supermarché, hypermarché ou toute autre surface de vente, de présenter au consommateur, pour chaque article présenté à la vente, un prix correspondant de façon fiable au prix tel qu'il figure dans le fichier central du site, c'est-à-dire au prix tel qu'il sera effectivement utilisé pour le paiement de l'article.

Un autre avantage de ces systèmes connus est de permettre de réaliser des changements de prix automatisés dans des délais beaucoup plus courts qu'avec un affichage manuel, que ce soit pour des périodes particulières de promotion sur le site, pour tout ou partie des articles présentés à la vente, pour répercuter des changements de tarifs, pour faire face à des situations d'inflation où les prix doivent être augmentés très fréquemment, etc...

D'autre part, il existe en matière d'affichage de prix de nombreuses contraintes, notamment légales, quant à la nature des prix affichés (prix unitaire, prix promotionnel, etc...), qui doivent être respectés par les systèmes électroniques de la même manière que par les affichages papier.

Ainsi les systèmes d'étiquettes électroniques de gondole, bien qu'ils tendent à devenir de plus en plus sophistiqués au fil du temps, restent toutefois relativement rigides quant aux différentes possibilités d'affichage, et quant à l'organisation temporelle et spatiale de ces différentes possibilités.

En outre, ces étiquettes électroniques de gondole permettent seulement d'afficher des informations relatives à l'article auxquels chacune d'entre elle est associée, et qui plus est, des informations généralement circonscrites au prix affichés par les étiquettes.

L'émergence du commerce électronique a fait naître chez le consommateur l'habitude d'une information détaillée et/ou spécifiquement à destination du consommateur. Or, l'affichage des informations actuellement pratiqué dans les surfaces de vente est nécessairement limité et n'offrent aucune interaction avec le consommateur auquel ses articles sont offerts à l'achat.

Des systèmes d'informations alternatifs ont été développés pour pallier ces problèmes, et notamment pour rendre sélectivement accessibles à un consommateur des informations détaillées sur un produit. Cependant, ces solutions ne sont le plus souvent applicables qu'à une enseigne de distribution à laquelle elles sont dédiées, voire à une seule surface de vente particulière.

Par exemple, la demande de brevet WO2006/035315 A1 présente un procédé dans lequel un terminal lit une information sur une puce radiofréquence, et appelle une application du terminal sur la base de l'information lue. L'application du terminal définit le type d'information produit qui va être fournie au terminal. L'application du terminal décode l'information et initie une communication avec un serveur pour récupérer une URL représentative de l'emplacement des données à fournir.

Pour ce procédé cependant, il faut que le terminal dispose, en interne, de l'ensemble des données lui permettant de décoder les informations de la puce radiofréquence. Il est donc nécessaire que l'application du terminal dispose d'une base de données couvrant l'ensemble des puces radiofréquences susceptibles d'être rencontrées, et que cette base de données soit à jour. En pratique, les exigences sur le terminal sont telles que celui-ci ne peut être destiné qu'à des usages professionnels, et non à de simples clients d'une surface de vente utilisant un terminal personnel. Par ailleurs, le choix de l'application du terminal est fait sur la base de l'information lue. Cette information lue doit donc être standardisée pour permettre le choix de l'application, ce qui complique la gestion des informations contenues dans la puce radiofréquence.

La demande de brevet US 2007/0016479 décrit une méthode pour obtenir des informations sur un produit à partir d'un identifiant contenu dans un tag RFID. Après acquisition de l'identifiant, le terminal envoie une première requête à un serveur qui redirige la requête vers un annuaire, et en réponse le serveur reçoit l'adresse de la page correspondante, puis accède à la page souhaitée via le serveur.

Cependant, ce procédé permet seulement l'accès à une ressource distante, et ne permet pas de sélectionner le lancement d'une application liée à une enseigne particulière. Ainsi, il peut être requis une intervention de la part de l'utilisateur lorsque plusieurs ressources sont disponibles, par exemple via la sélection dans un menu, ce qui complique la tâche de l'utilisateur.

Les procédés de l'état de la technique ne sont donc pas adaptés à une utilisation par un client d'une surface de vente. En effet, ils nécessitent la connaissance a priori du contexte permettant de retrouver les informations, et donc une configuration préalable, ce qui est possible pour une utilisation professionnelle telle que les inventaires, mais n'est pas souhaitable pour un client. En particulier, les procédés connus sont adaptés à un environnement particulier, c'est-à-dire propre à une enseigne, mais ne peuvent pas être mis en oeuvre indépendamment de l'enseigne de la surface de vente. Par ailleurs, les données d'une enseigne ne sont en général accessibles que par une application dédiée à ladite enseigne. Par conséquent, il n'est pas possible d'utiliser les procédés de l'état de la technique dans différents magasins.

De fait, lorsqu'un client acquiert une information à partir d'un périphérique radiofréquence, il n'y a pas d'indications sur la surface de vente dans laquelle il se trouve en l'absence de configuration préalable. Il n'est donc possible de retrouver les données finales qu'en faisant intervenir le client, par exemple préalablement par le lancement de l'application dédiée à l'enseigne de la surface de vente dans laquelle il se trouve, ou bien par le choix de l'enseigne via un menu. Il existe donc un besoin pour un procédé qui permette au client d'obtenir les données souhaitées sans intervention de sa part autre que la lecture d'un dispositif radiofréquence.

### PRESENTATION DE L'INVENTION

La présente invention vise ainsi à proposer un moyen de fournir à un consommateur des informations qui soient complémentaires des informations déjà visuellement disponibles dans une surface de vente au moyen d'un accès contrôlé par l'enseigne de distribution associée à la surface de vente, sans nécessité d'intervention de la part du consommateur. Un autre objectif est de pouvoir fournir au consommateur, sur le lieu de vente, des informations destinées spécifiquement à ce consommateur et personnalisées pour lui. Un autre objet de l'invention vise à proposer un moyen de fournir à un consommateur des informations en fonction du contexte précis (lieu, instant, intérêt ...) du consommateur, et notamment spatialement et temporellement localisées.

A cet effet, on propose selon un premier aspect un procédé de communication à un terminal mobile de données représentatives d'une information associée à un périphérique radiofréquence dans une surface munie d'une série de périphériques radiofréquences, chaque périphérique radiofréquence étant identifié par un unique identifiant de périphérique radiofréquence qui lui est propre, ledit terminal mobile exécutant une application primaire et disposant de plusieurs applications secondaires chacune associée à une information d'enseigne,
ledit procédé comprenant au moins les étapes selon lesquelles :
- le terminal mobile établit une communication par radiofréquence avec un périphérique radiofréquence,
- le terminal mobile reçoit du périphérique radiofréquence l'identifiant de périphérique radiofréquence dudit périphérique radiofréquence,
- l'application primaire génère une requête primaire comportant une première information caractéristique dérivée dudit identifiant de périphérique radiofréquence et le terminal mobile émet ladite requête à un serveur primaire,
- le terminal mobile reçoit du serveur primaire une information d'enseigne associée à ladite première information caractéristique en réponse à la requête primaire,
- l'application primaire démarre sélectivement une application secondaire en fonction de l'information d'enseigne associée à ladite première information caractéristique,
- l'application secondaire génère une requête secondaire comportant une seconde information caractéristique dérivée dudit identifiant de périphérique radiofréquence et le terminal mobile émet ladite requête secondaire à un serveur secondaire, ledit serveur secondaire étant sélectionné sur la base de l'information d'enseigne,
- le terminal mobile reçoit du serveur secondaire des données représentatives d'une information associée audit périphérique radiofréquence en réponse à la requête secondaire.

L'invention permet au client d'une surface de vente d'une enseigne quelconque d'obtenir des données sur un produit associé à l'étiquette sans autre intervention que la lecture d'un périphérique radiofréquence au moyen de son terminal mobile. Le procédé permet au terminal d'identifier l'enseigne adéquate par une première requête à un serveur primaire, donc sans nécessité d'information préalable, et de lancer l'application secondaire correspondante, qui pourra aller chercher les données propres à chaque enseigne. Le même procédé peut ainsi être mis en oeuvre dans différents magasins appartenant à différentes enseignes.

L'invention selon le premier aspect est avantageusement mais facultativement complétée par les caractéristiques suivantes, prises seules ou en une quelconque de leur combinaison techniquement possible:
- l'émission de la requête primaire est conditionnée au fait:
   - qu'une durée déterminée se soit écoulée depuis la dernière interaction entre le terminal mobile et un serveur primaire ou secondaire, ou
   - qu'une requête secondaire n'a pas été satisfaite;
- préalablement à l'émission de la requête primaire, le terminal mobile émet une requête secondaire comportant une seconde information caractéristique dérivée dudit identifiant de périphérique radiofréquence à un serveur secondaire, ledit serveur secondaire étant sélectionné sur la base d'une information d'enseigne préalablement disponible pour le terminal mobile typiquement, par défaut dernière enseigne visitée;
- si une durée déterminée depuis la dernière interaction entre le terminal mobile et un serveur secondaire ou un serveur primaire est écoulée, le terminal mobile émet une requête primaire comportant une première information caractéristique dérivée de l'identifiant de périphérique radiofréquence au serveur primaire;
- dans le cas où le terminal mobile ne reçoit pas des données représentatives d'une information associée à un périphérique radiofréquence en réponse à une requête secondaire, ledit terminal mobile émet une requête primaire comportant une première information caractéristique dérivée dudit identifiant de périphérique radiofréquence au serveur primaire;
- nonobstant l'émission ou non d'une requête primaire, le terminal mobile émet une requête secondaire comportant une seconde information caractéristique dérivée dudit identifiant de périphérique radiofréquence à un serveur secondaire, ledit serveur secondaire étant sélectionné sur la base d'une information d'enseigne préalablement disponible pour le terminal mobile;
- à la suite de la réception par le terminal mobile de l'information d'enseigne associée à ladite première information caractéristique en réponse à la requête primaire, ledit terminal mobile émet directement des requêtes secondaires comportant des secondes informations caractéristiques dérivées d'identifiants de périphériques radiofréquences au serveur secondaire pour les identifiants de périphériques radiofréquences subséquemment reçus par le terminal mobile;
- les identifiants de périphériques radiofréquences subséquemment reçus par le terminal mobile sont stockés dans une mémoire dudit terminal mobile, lesdits identifiants de périphériques radiofréquences étant horodatés par l'association d'une information de temps à chacun desdits identifiants de périphériques radiofréquences subséquemment reçus;
- lesdits identifiants de périphériques radiofréquences horodatés peuvent être transmis au serveur primaire en même temps qu'une requête primaire;
- le terminal mobile exécute une application primaire, ladite application primaire étant notamment configurée pour:
   - générer la requête primaire comportant la première information caractéristique au serveur primaire,
   - démarrer sélectivement une application secondaire en fonction de l'information d'enseigne associée à ladite première information caractéristique;
- l'application secondaire est notamment configurée pour générer la requête secondaire comportant la seconde information caractéristique au serveur secondaire;
- l'application secondaire est associée à une pluralité de serveurs secondaires, le serveur secondaire destinataire de la requête secondaire étant sélectionné sur la base de l'information d'enseigne parmi ladite pluralité de serveurs secondaires auxquels est associée l'application secondaire;
- l'établissement de la communication entre le terminal mobile et le périphérique radiofréquence comprend les étapes selon lesquelles :
   - le terminal mobile est amené à proximité du périphérique radiofréquence, de sorte que le périphérique radiofréquence soit à portée d'ondes électromagnétiques émises par le terminal mobile, et
   - ledit périphérique radiofréquence est activé par l'énergie des ondes électromagnétiques émises par le terminal mobile afin d'établir la communication par radiofréquence entre le périphérique radiofréquence et le terminal mobile;
- le terminal mobile communique via le réseau internet avec le serveur primaire pour l'émission de la requête primaire comportant la première information caractéristique et pour la réception de l'information d'enseigne associée à ladite première information caractéristique;
- le terminal mobile communique via le réseau internet avec le serveur secondaire pour l'émission de la requête secondaire comportant la seconde information caractéristique et pour la réception des données représentatives d'une information associée audit périphérique radiofréquence.

L'invention concerne également un produit programme d'ordinateur comprenant des instructions de code de programme pour l'exécution des étapes du procédé selon l'invention, lorsque ledit programme est exécuté par un terminal mobile.

L'invention concerne également un terminal mobile comprenant
- des moyens de communication par radiofréquence avec un périphérique radiofréquence,
- des moyens de communication avec au moins un serveur primaire et au moins un serveur secondaire,
- des moyens de traitement de données,
ledit terminal mobile étant configuré pour mettre en oeuvre le procédé selon l'invention.

L'invention concerne également un système de communication comprenant:
- un terminal mobile selon l'invention,
- une série de périphériques radiofréquences, chaque périphérique radiofréquence étant identifié par un unique identifiant de périphérique radiofréquence qui lui est propre, et le terminal mobile peut établir une communication avec chaque périphérique radiofréquence pour acquérir l'identifiant de périphérique radiofréquence dudit périphérique radiofréquence,
- au moins un serveur primaire ayant accès à une base de données comprenant une pluralité de premières informations caractéristiques dérivées de chaque identifiant de périphérique radiofréquence de ladite surface, chacune desdites premières informations caractéristiques étant associée à une information d'enseigne, ledit serveur primaire étant configuré pour communiquer, en réponse à une requête primaire comportant une première information caractéristique dérivée d'un identifiant de périphérique radiofréquence, l'information d'enseigne associée audit identifiant de périphérique radiofréquence,
- au moins un serveur secondaire ayant accès à une base de données comprenant une pluralité de secondes informations caractéristiques dérivées d'identifiants de périphériques radiofréquences, chacune desdites secondes informations caractéristiques étant associée à des données représentatives d'une information associée à un périphérique radiofréquence, ledit serveur secondaire étant configuré pour communiquer, en réponse à une requête secondaire comportant une seconde information caractéristique de ladite pluralité de secondes informations caractéristiques, les données représentatives d'une information à laquelle ladite seconde information caractéristique est associée.

L'invention vise notamment à permettre de communiquer à l'utilisateur d'un terminal mobile des données représentatives d'une information associée à un périphérique radiofréquence au moyen d'une seule configuration du terminal mobile, notamment dans le cas d'un périphérique radiofréquence d'une étiquette électronique de gondole, et ce indépendamment de la sélection manuelle de l'application de l'enseigne de distribution particulière à laquelle est apparentée la surface de vente dans laquelle se trouve cette étiquette électronique de gondole. L'invention permet donc de rendre plus aisée et confortable cette opération pour l'utilisateur.

En effet, dans le cadre de l'invention, l'utilisateur n'a pas à faire de distinction entre les différentes enseignes de distribution, et se contente d'approcher son terminal mobile d'une étiquette électronique de gondole muni d'un périphérique radiofréquence; c'est le procédé selon l'invention qui détermine l'enseigne de distribution appropriée et qui procède à l'établissement de la communication avec les entités détentrices des informations désirées par l'utilisateur, notamment par le biais du lancement d'une application idoine spécifique à l'enseigne de distribution ainsi déterminée.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:
- la figure 1 est un schéma illustrant le système selon un mode de réalisation possible du second aspect de l'invention ;
- la figure 2 est un schéma illustrant une vue de l'avant d'une étiquette électronique de gondole ;
- la figure 3 est une vue par transparence de l'arrière d'une étiquette électronique de gondole présentant un périphérique radiofréquence d'un système selon l'invention ;
- la figure 4 est un schéma illustrant un exemple de mise en oeuvre possible du procédé selon l'invention.

### DESCRIPTION DETAILLEE

La description suivante sera faite dans le cadre d'une surface de vente pourvue d'une pluralité d'étiquettes électroniques de gondole, chacune de ces étiquettes étant munie d'un périphérique radiofréquence au moyen duquel est mise en oeuvre l'invention. Ainsi, dans la description qui suit, chaque périphérique radiofréquence est associé de façon biunivoque à une étiquette électronique de gondole d'une surface de vente, et
- l'identifiant de périphérique radiofréquence est un identifiant d'étiquette;
- les données représentatives d'une information associée au périphérique radiofréquence sont des données représentatives d'une information associée à l'étiquette électronique de gondole.

Typiquement, on peut lire dans chaque périphérique radiofréquence un identifiant unique (UID, acronyme de l'anglais "Unique Identifier Data") qui est le numéro de série du périphérique radiofréquence, et/ou une information permettant l'identification de l'étiquette. Cette information permettant l'identification de l'étiquette est définitivement attribuée à l'étiquette lors de la fabrication de ladite étiquette, constituant ainsi un identifiant de l'étiquette. Cet identifiant est définitivement mémorisé dans le périphérique radiofréquence. Cette dernière peut par exemple être composée d'un préfixe suivi du numéro de série de l'étiquette formant l'identifiant d'étiquette, tel que www.SES-ESL.com/123456789, le suffixe "www.SES-ESL.com" permettant, lors de la lecture du périphérique radiofréquence, de reconnaitre l'identifiant comme étant susceptible d'être communiqué à un serveur primaire.

En effet, en raison du caractère biunivoque de la relation entre un périphérique radiofréquence et une étiquette électronique de gondole, et de l'unicité de l'identifiant aussi bien pour l'étiquette que pour le périphérique radiofréquence, un identifiant de périphérique radiofréquence peut identifier une étiquette électronique de gondole, et vice-versa, un identifiant d'étiquette électronique de gondole peut identifier un périphérique radiofréquence, de sorte qu'un identifiant de périphérique radiofréquence est aussi un identifiant d'étiquette, et les données représentatives d'une information associée au périphérique radiofréquence sont aussi des données représentatives d'une information associée à l'étiquette électronique de gondole.

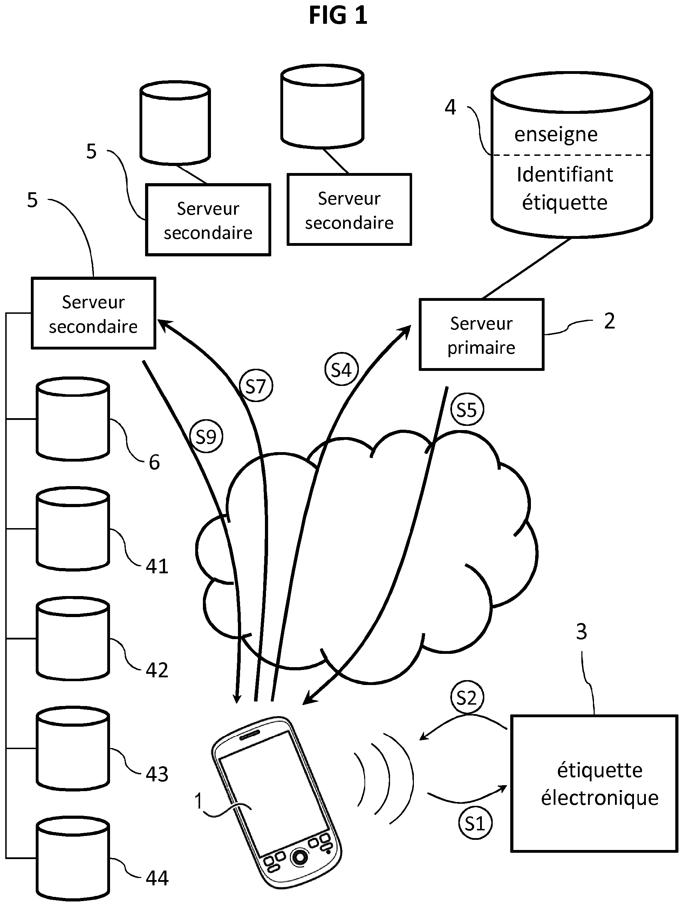

Sur la figure 1 est représenté, dans un but illustratif et non limitatif, un système de communication correspondant à un mode de réalisation possible de l'invention.

Le système illustré comprend un terminal mobile 1 comprenant des moyens de communication par radiofréquence avec un périphérique radiofréquence d'une étiquette électronique de gondole 3, des moyens de communication avec au moins un serveur primaire 2 et au moins un serveur secondaire 5, ainsi des moyens de traitement de données, typiquement un processeur. Ce terminal mobile 1 est de préférence muni de moyens d'affichage d'informations, tel qu'un écran, à destination d'un utilisateur dudit terminal mobile 1.

La communication entre le terminal mobile 1 et le serveur primaire 2 peut être établie au moyen de tout réseau de communication, notamment sans fil, par exemple via un réseau sans fil de type WIFI ou 3G. Ainsi la communication peut être établie en passant par le réseau internet auquel est relié le serveur primaire 2. De même, la communication entre le terminal mobile 1 et le serveur secondaire 5 peut être établi au moyen de tout réseau de communication, notamment sans fil, par exemple via un réseau sans fil de type WIFI ou 3G. Ainsi la communication peut être établie en passant par le réseau internet auquel est relié le serveur secondaire.

Afin de faciliter cette communication, la surface de vente peut disposer de bornes WIFI établissant une connexion entre le terminal mobile 1 et le réseau internet auquel sont par exemple connectés le serveur primaire 2 et le serveur secondaire 5.

Un exemple courant d'un tel terminal mobile 1 est un téléphone portable intelligent dit de type "smartphone", qui offre à la fois des possibilités de connexion, de traitement et d'affichage d'informations appropriées. En outre, la généralisation de ce type de téléphone permet à un grand nombre de consommateurs d'utiliser leur propre terminal mobile 1. D'autres terminaux mobiles peuvent être utilisés dès lors qu'ils répondent aux exigences de communicabilité avec des serveurs distants et de capacité d'afficher des informations à leur utilisateur. Par exemple, une tablette tactile peut être utilisée en tant que terminal mobile 1.

Le système comprend également une série d'étiquettes électroniques de gondole 3, également connues sous le nom anglais de "Electronic Shelf Label", chaque étiquette électronique de gondole 3 étant identifiée par un unique identifiant d'étiquette qui lui est propre. Typiquement, cet identifiant d'étiquette est attribuée à l'étiquette électronique au moment de sa fabrication, et ne peut pas être modifié. L'étiquette électronique 3 comporte un périphérique radiofréquence 36 avec lequel le terminal mobile 1 peut établir une communication pour acquérir l'identifiant d'étiquette de ladite étiquette électronique de gondole 3. Cette identifiant d'étiquette permet d'identifier de manière univoque une seule et unique étiquette de gondole 3 de la surface de vente. La série d'étiquettes électroniques de gondole 3 est répartie dans la surface de vente, chaque étiquette électronique de gondole 3 étant associée à un produit de la surface de vente, en affichant notamment le prix et les références de ce produit.

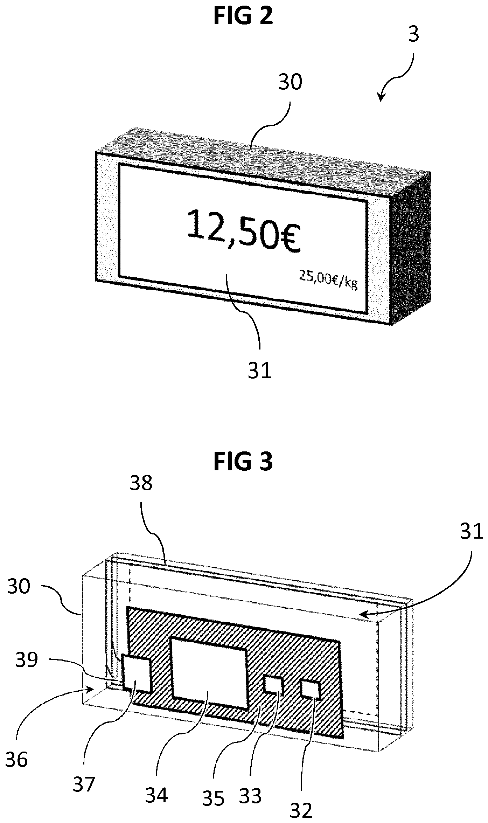

Les figures 2 et 3 illustrent un exemple d'étiquette électronique de gondole 3 dans le cadre de l'invention. Une telle étiquette électronique de gondole comporte un écran d'affichage 31 pour l'affichage d'informations relatives à un article auquel elle est associée. Typiquement, et ainsi qu'illustré sur la figure 2, ces informations comprennent le prix de l'article, et d'autres informations habituellement disponibles dans une surface de vente, par exemple le prix par kilogramme pour un produit alimentaire. L'étiquette électronique de gondole comporte également un boîtier 30 en plastique à l'intérieur duquel sont logés les constituants fonctionnels de l'étiquette électronique de gondole 3.

Notamment, l'étiquette électronique de gondole 3 comporte un module de communication radiofréquence 32 pour recevoir des données représentatives d'informations relatives à un article en provenance d'une station centrale, une mémoire 33 pour stocker lesdites données, et un microcontrôleur 34 pour commander l'affichage des informations relatives à l'article. Ces différents constituants fonctionnels sont disposés sur une carte de circuit imprimé 35 logée dans le boîtier 30.

L'étiquette électronique de gondole 3 de ladite série d'étiquettes électroniques de gondole comporte également un périphérique radiofréquence 36 avec lequel le terminal mobile 1 peut établir une communication pour acquérir l'identifiant d'étiquette de ladite étiquette électronique de gondole 3.

Le périphérique radiofréquence 36 de l'étiquette électronique de gondole 3 comprend une antenne 38 et une puce électronique 37 de type NFC (acronyme de l'anglais Near Field Communication pour communication en champ proche) ou RFID (acronyme de l'anglais Radio Frequency Identification pour identification radiofréquence).

Un périphérique radiofréquence de type NFC fonctionne avec une fréquence de 13,56 Mhz comme un périphérique radiofréquence de type RFID HF.

Un périphérique radiofréquence de type NFC correspond au protocole ISO 14443, très sécurisé avec cryptage. La communication par NFC tend à se répandre dans les terminaux mobiles personnels tels que les téléphones portables, et par conséquent offre l'avantage d'un déploiement massif. Les terminaux mobiles dotés de NFC ne supportaient initialement que le protocole ISO 14443 mais les nouveaux appareils sont majoritairement bi-modes et il est à prévoir que le développement futur sera à la bi-modalité.

L'application qui en est faite dans les étiquettes électroniques de gondole 3 ne nécessitant pas de niveau de sécurité élevé, un périphérique radiofréquence de type RFID HF ISO 15693 est tout à fait adapté à cet usage puisque son ergonomie d'utilisation, ainsi que son plus faible coût le rend plus attractif.

De préférence, la puce 37 et l'antenne 38 sont agencées en des endroits différents de l'étiquette électronique de gondole 3, des connexions 39 assurant la liaison entre l'antenne 38 et la puce 37.

De préférence encore, la puce 37 est connectée au microcontrôleur 34 de l'étiquette électronique de gondole 3, et l'antenne 38 est disposée sur ou dans le boîtier 30 à l'intérieur duquel est logé ledit microcontrôleur 34. De préférence encore, l'antenne 38 est disposée du côté de la face avant de l'étiquette électronique de gondole 3, vers son écran d'affichage 31, tandis que la puce électronique 37 est disposée sur la carte de circuit imprimé 35, du côté de la face arrière de l'étiquette électronique de gondole 3.

En effet, l'intégration d'un périphérique radiofréquence 36 rassemblant sur un même support puce et antenne n'est pas souhaitable sur la face avant de l'étiquette électronique de gondole 3, car préjudiciable à la maximisation de la surface d'affichage de l'écran d'affichage 31, afin notamment de permettre la densification des étiquettes électroniques de gondole 3 sur une gondole de présentation d'articles, spécialement dans le cas de petits articles.

En outre, la connectique entre la puce électronique 37 et le microcontrôleur 34 peut être complexe et délicate à réaliser industriellement à un coût réduit. La puce 37 est alors de préférence implantée sur la carte de circuit imprimé, facilitant ainsi la connexion de celle-ci au microcontrôleur 34.

Cependant, un positionnement de l'antenne sur la face arrière à l'intérieur à côté de la puce 37 réduirait la distance et la fiabilité de lecture puisque celle-ci devrait alors se faire à travers l'écran d'affichage 31 de l'étiquette électronique de gondole 3 (typiquement d'une épaisseur de 1cm) et les perturbations électromagnétiques induites par la carte de circuit imprimé.

Il est donc préférable de séparer l'antenne 38 de la puce 37. La puce 37 est alors de préférence implantée sur la carte de circuit imprimé, facilitant ainsi la connexion de celle-ci au microcontrôleur 34.

L'antenne 38 est donc de préférence intégrée dans le boitier 30 en plastique, vers l'avant de celui-ci, préférentiellement autour de la réserve accueillant l'écran d'affichage 31 et surmoulée à l'injection lors de la fabrication du boîtier 30. La taille de l'antenne 38 peut être maximisée et ainsi augmenter la distance de communication.

Cependant, de préférence, cette distance de communication avec le périphérique radiofréquence 36 sera choisi relativement faible, inférieur à 20 cm, et de préférence encore inférieure à 10 cm, par rapport à l'antenne 38.

De préférence, le terminal mobile 1 est adapté pour transmettre des données à l'étiquette électronique de gondole 3 via le périphérique radiofréquence 36 de ladite étiquette électronique de gondole 3. Ainsi, l'affichage de l'étiquette électronique de gondole 3 peut être mis à jour par le terminal mobile 1, par exemple lorsque le terminal mobile 1 est utilisé par un employé de la surface de vente.

Selon un mode de réalisation facultatif, l'affichage de l'étiquette électronique de gondole 3 peut être modifié lors de la communication avec le terminal mobile 1. Par exemple, on peut prévoir la modification de la luminosité de l'affichage (clignotement ou variation d'intensité) ou l'affichage d'informations particulières dès lors qu'un périphérique radiofréquence 36 communique avec un terminal mobile 1.

Le système comprend également au moins un serveur primaire 2 ayant accès à une base de données 4 comprenant une pluralité de premières informations caractéristiques, chacune dérivée d'un identifiant d'étiquette de ladite surface de vente. Chacune desdites premières informations caractéristique est associée à une information d'enseigne, laquelle information d'enseigne peut être associée à plusieurs premières informations caractéristiques. Lesdites premières informations caractéristiques permettent chacune d'identifier le périphérique radiofréquence ou l'étiquette électronique de gondole auquel appartient l'identifiant de périphérique radiofréquence ou d'étiquette duquel est dérivée ladite première information caractéristique. Une première information caractéristique est donc caractéristique du périphérique radiofréquence et de l'étiquette électronique de gondole. Par exemple, la première information caractéristique peut être l'identifiant d'étiquette, tel quel, ou bien sous une forme modifiée.

Le serveur primaire 2 est configuré pour communiquer, en réponse à une requête primaire comportant une première information caractéristique parmi ladite pluralité de premières informations caractéristique, l'information d'enseigne associée à ladite première information caractéristique.

Le système comprend enfin au moins un serveur secondaire 5 ayant accès à une base de données 6 comprenant une pluralité de secondes informations caractéristiques dérivées d'identifiants d'étiquettes, chacune desdites secondes informations caractéristiques étant associée à des données représentatives d'une information associée à une étiquette électronique de gondole. De même que les premières informations caractéristiques, les secondes informations caractéristiques permettent chacune d'identifier l'étiquette électronique de gondole auquel appartient l'identifiant d'étiquette duquel est dérivée ladite seconde information caractéristique. Pour un identifiant d'étiquette, la première information caractéristique et la seconde information caractéristique peuvent d'ailleurs être identiques. Par exemple, la seconde information caractéristique peut être l'identifiant d'étiquette, tel quel, ou bien sous une forme modifiée.

Le serveur secondaire 5 est configuré pour communiquer, en réponse à une requête secondaire comportant une seconde information caractéristique de ladite pluralité de secondes informations caractéristiques, les données représentatives d'une information auxquelles ladite seconde information caractéristique est associée.

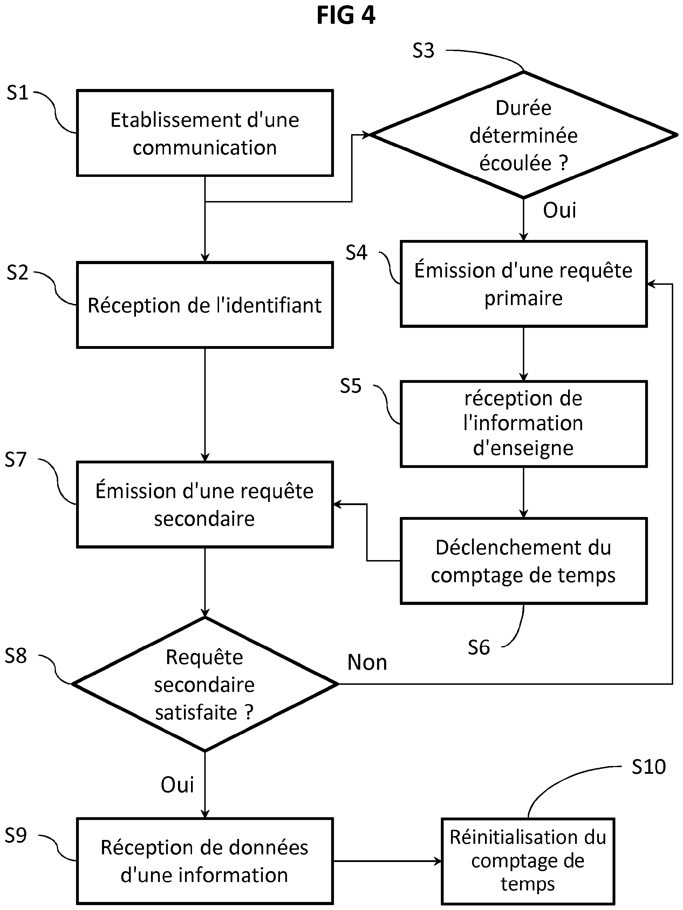

Le système de communication de données représentatives d'une information associée à une étiquette électronique de gondole 3 dans une surface de vente munie d'une série d'étiquettes électroniques de gondole 3 est configuré pour mettre en oeuvre le procédé selon l'invention, dont un mode de réalisation possible va être décrit, notamment en référence à la figure 4, illustrant un exemple de mise en oeuvre possible du procédé selon l'invention.

Le procédé permet de communiquer des données représentatives d'une information associée à une étiquette électronique de gondole 3 au 1 terminal mobile. Premièrement, le terminal mobile 1 établit une communication par radiofréquence avec un périphérique radiofréquence 36 d'une étiquette électronique de gondole 3 (étape S1).

Pour ce faire, le terminal mobile 1 est amené à proximité du périphérique radiofréquence 36 de l'étiquette électronique de gondole 3, de sorte que le périphérique radiofréquence 36 soit à portée d'ondes électromagnétiques émises par le terminal mobile 1.

Le périphérique radiofréquence 36 est alors activé par l'énergie des ondes électromagnétiques émises par le terminal mobile 1 afin d'établir une communication par radiofréquence avec le périphérique radiofréquence 36 de l'étiquette électronique de gondole 3.

Le terminal mobile 1 reçoit du périphérique radiofréquence 36 de ladite étiquette électronique de gondole 3 l'identifiant d'étiquette de ladite étiquette électronique de gondole 3 (étape S2). Cet identifiant d'étiquette peut être communiqué seul, ou accompagné d'autres informations, ou bien encore par la communication de données, qui sont au moins partiellement générées à partir dudit identifiant, et qui permettent d'identifier l'étiquette électronique de gondole 3 dans la surface de vente. Typiquement, l'identifiant d'étiquette reçu par le terminal mobile 1 comprend une indication identifiant les données reçues comme constituant un identifiant d'étiquette. Il peut s'agir par exemple d'une suite de caractère caractérisant un identifiant d'étiquette. L'indication permet donc de reconnaître qu'il s'agit d'un identifiant d'étiquette et de traiter celui-ci comme un identifiant d'étiquette.

Le terminal mobile 1 exécute une application primaire, par exemple au moyen d'un système d'exploitation embarqué dans le terminal mobile 1. Cette application primaire est par exemple un middleware, logiciel qui sert d'intermédiaire entre des applications informatiques. Cette application primaire peut être active avant la détection d'un périphérique radiofréquence 36 d'une étiquette électronique de gondole 3, ou bien être démarrée en réponse à la réception par le terminal mobile 1 de l'identifiant d'étiquette.

L'application primaire génère une requête primaire comportant une première information caractéristique dérivée dudit identifiant d'étiquette au serveur primaire 2. Ainsi qu'expliqué précédemment, la première information caractéristique doit permettre d'identifier l'étiquette électronique de gondole 3 dans la surface de vente, et peut prendre la forme du seul identifiant d'étiquette, mais ce n'est pas nécessaire, et elle peut en être une forme modifiée. Ainsi, les données de la requête primaire échangées entre le terminal mobile 1 et le serveur primaire 2 peuvent être les mêmes ou bien être différentes de celles échangées entre l'étiquette électronique de gondole 3 et le terminal mobile 1, la seule exigence étant la possibilité d'identification de l'étiquette électronique de gondole 3 dans la surface de vente.

De préférence, ainsi qu'illustré sur la figure 4, et afin de limiter le nombre de requêtes primaires, l'émission de la requête primaire est conditionnée au fait:
- que la durée déterminée s'est écoulée depuis la dernière interaction entre le terminal mobile 1 et un serveur secondaire ou un serveur primaire, ou
- que la dernière requête secondaire n'a pas été satisfaite.

Ainsi, après l'établissement de la communication par radiofréquence entre le terminal mobile 1 et un périphérique radiofréquence 36 d'une étiquette électronique de gondole 3 (étape S1), le terminal mobile effectue un test (étape S3) pour savoir si une durée déterminée est écoulée depuis la dernière interaction entre le terminal mobile 1 et un serveur primaire 2 ou un serveur secondaire 5. Cette durée déterminée correspond à la durée d'une session d'achat typique de la surface de vente, et est par exemple de 20 ou 30 minutes. Le test (étape S3) peut également être effectué à la réception de l'identifiant d'étiquette d'une étiquette électronique de gondole 3.

Si la durée déterminée est écoulée, il est possible que l'utilisateur ait changé de surface de vente, et qu'une nouvelle information d'enseigne doive être récupérée au moyen de l'étape subséquente d'émission d'une requête primaire (étape S4), afin de recevoir l'information d'enseigne (étape S5) requise pour que la requête secondaire soit adressée à un serveur secondaire 5 susceptible de satisfaire celle-ci. Un comptage de temps est lancé (étape S6) à la réception d'une requête primaire. Ce comptage de temps est réinitialisé (étape S10) à la réception par le terminal mobile 1 des données d'une information associée au périphérique radiofréquence de l'étiquette électronique (étape S9) en réponse à une requête secondaire. Si aucune information d'enseigne n'a été reçue encore, la durée déterminée peut être considérée comme écoulée.

Si la durée déterminée n'est pas écoulée, il est probable qu'il s'agit de la même session d'achat, et que par conséquent l'information d'enseigne disponible est encore valable.

De même, à la suite de l'émission d'une requête secondaire (étape S7), un test est effectué (étape S8) par le terminal mobile pour déterminer si la requête secondaire a été satisfaite. Si la requête secondaire a été satisfaite, c'est que le terminal mobile 1 a reçu (étape S9) des données représentatives d'une information associée à l'étiquette électronique de gondole 3 en réponse à sa requête secondaire.

Le serveur secondaire 5 auquel a été envoyée cette requête secondaire a donc pu satisfaire la requête, c'est-à-dire qu'il a pu retrouver les données représentatives d'une information associée à ladite étiquette électronique de gondole au moyen de la seconde information caractéristique contenue dans la requête secondaire.

Si le serveur secondaire 5 auquel est envoyée cette requête secondaire ne peut satisfaire la requête, cela signifie que l'utilisateur a changé de surface de vente, et que l'identifiant d'étiquette qu'il a acquis correspond à une étiquette électronique de gondole 3 d'une autre enseigne de distribution, pour laquelle ledit serveur secondaire n'a pas accès aux secondes informations caractéristiques. Dans ce cas, le serveur secondaire 5 renvoie un message d'erreur, et le test (étape S8) de satisfaction de la requête secondaire n'est pas réussi.

Cela indique que l'information d'enseigne à partir de laquelle le serveur secondaire 5 a été sélectionné n'est pas valable pour cet identifiant, et donc qu'une requête primaire doit être émise, même si la durée déterminée n'est pas encore écoulée, afin que le terminal mobile 1 reçoive l'information d'enseigne qui lui permettra d'envoyer sa requête secondaire au bon serveur secondaire 5.

Par conséquent, si la durée déterminée s'est écoulée depuis la dernière interaction entre le terminal mobile 1 et un serveur secondaire ou un serveur primaire, ou la dernière requête secondaire n'a pas été satisfaite, le terminal mobile 1 émet la requête primaire comportant ladite première information caractéristique à un serveur primaire 2 (étape S4).

Le serveur primaire 2 détermine une information d'enseigne associée à ladite première information caractéristique en recherchant ladite première information caractéristique, ou bien une forme dérivée de celle-ci, dans une base de données 4 à laquelle ledit serveur primaire 2 a accès. Dans cette base de données 4, chaque première information caractéristique est associée à une information d'enseigne. Ainsi, cette base de données permet d'identifier l'enseigne de distribution à laquelle appartient l'étiquette électronique de gondole 3 identifiée par la première information caractéristique dérivée de son identifiant d'étiquette, et par voie de conséquence, à quelle enseigne de distribution est rattachée la surface de vente dans laquelle se trouve le consommateur qui agit avec le terminal mobile 1. La présence d'un serveur primaire 2 distant, ou du moins d'une base de données 4 distante, peut notamment être justifiée par le très grand nombre de premières informations caractéristiques que cette base de données 4 doit contenir, de l'ordre de plusieurs centaines de milliers, voire plusieurs millions, correspondant au nombre d'étiquettes de gondole 3 mises en circulation dans une zone géographique. En outre, cette distanciation permet de s'assurer que les données de la base de données 4 sont à jour.

Le terminal mobile 1 reçoit ensuite (étape S5) du serveur primaire 5 l'information d'enseigne associée à ladite première information caractéristique en réponse à la requête primaire. L'information d'enseigne peut notamment comprendre non seulement une indication concernant l'identification de l'enseigne de distribution, mais également d'autres informations, par exemple l'indication d'un serveur secondaire 5 particulier associé à ladite enseigne de distribution, un code-barres, ou toute autre identifiant, du produit associé à l'étiquette électronique de gondole 3 ou des informations à destination du client, tel que le prix dudit produit, par exemple pour affichage sur le terminal mobile 1. La transmission d'informations à destination du client en réponse à la requête primaire permet notamment d'assurer la justesse des informations transmises, notamment dans le cas où le serveur primaire collabore ou participe à la mise à jour de l'affichage des étiquettes électroniques de gondole 3.

L'application primaire exécutée par le terminal mobile 1 démarre alors sélectivement une application secondaire en fonction de l'information d'enseigne associée à ladite première information caractéristique. Cette application secondaire est également exécutée par le terminal mobile 1, et est typiquement propre à l'enseigne de distribution identifiée par l'information d'enseigne, voire a été développée spécifiquement par ou pour cette enseigne de distribution. Ainsi, le terminal mobile 1 dispose généralement de plusieurs applications secondaires qui peuvent être démarrée, chacune associée à une information d'enseigne identifiant une enseigne de distribution, et l'application primaire démarre sélectivement l'application secondaire associée à l'information d'enseigne. L'application primaire transmet également à l'application secondaire qu'elle démarre l'identifiant d'étiquette, la première information caractéristique ou bien une seconde information caractéristique dérivée dudit identifiant d'étiquette, soit lors du démarrage, soit subséquemment à celui-ci.

La sélection de l'application secondaire par l'application primaire sur la base de l'information d'enseigne permet donc d'affranchir l'utilisateur de cette sélection, par une opération transparente pour l'utilisateur puisqu'elle ne requiert aucune action de la part de celui-ci à l'exception de la mise à proximité du terminal mobile 1 et de l'étiquette électronique de gondole 3. On peut d'ailleurs prévoir que l'application primaire ne soit pas visible pour l'utilisateur.

L'application secondaire est associée à au moins un serveur secondaire 5, de sorte que le démarrage sélectif de l'application secondaire correspond à la sélection d'au moins un serveur secondaire 5, ce serveur secondaire 5 étant par conséquent sélectionné sur la base de l'information d'enseigne, puisque celle-ci a permis la sélection de l'application secondaire. L'application secondaire peut être associée à une pluralité de serveurs secondaires 5, le serveur secondaire 5 destinataire de la requête secondaire étant sélectionné sur la base de l'information d'enseigne parmi la pluralité de serveurs secondaires 5 auxquels est associée l'application secondaire.

La seconde information caractéristique doit permettre d'identifier l'étiquette électronique de gondole 3 dans la surface de vente, et peut prendre la forme du seul identifiant d'étiquette, mais ce n'est pas nécessaire, et elle peut en être une forme modifiée. Ainsi, les données de la requête secondaire échangées entre le terminal mobile 1 et le serveur secondaire 5 peuvent être les mêmes ou bien être différentes de celles de la requête primaire. De préférence, la seconde information caractéristique permet l'identification de l'étiquette électronique de gondole 3 dans la surface de vente, mais elle peut correspondre seulement au produit associé à l'étiquette électronique de gondole identifiée par ledit identifiant d'étiquette. La seconde information caractéristique peut également comprendre tout ou partie de l'information d'enseigne.

L'application secondaire génère donc une requête secondaire comportant une seconde information caractéristique dérivée de l'identifiant d'étiquette, requête secondaire destinée au serveur secondaire sélectionné. Le terminal mobile 1 émet alors (étape S7) la requête secondaire comportant ladite seconde information caractéristique au serveur secondaire 5.

Le serveur secondaire 5 a accès à une base de données 6 comprenant une pluralité comprenant une pluralité de secondes informations caractéristiques dérivées d'identifiants d'étiquette, chacune desdites secondes informations caractéristiques étant associée à des données représentatives d'une information associée à une étiquette électronique de gondole 3, ledit serveur secondaire 5 étant configuré pour communiquer, en réponse à une requête secondaire comportant une seconde information caractéristique de ladite pluralité de secondes informations caractéristiques, les données représentatives d'une information auxquelles ladite seconde information caractéristique est associée.

Ainsi, le terminal mobile 1 reçoit (étape S10) du serveur secondaire 5 des données représentatives d'une information associée à ladite étiquette électronique de gondole 3 en réponse à la requête secondaire. Comme expliqué plus haut, une réinitialisation (étape S10) du comptage de temps est alors effectuée.

Typiquement, ces données représentatives d'une information peuvent correspondre à des informations complémentaires portant sur un article associé à l'étiquette électronique de gondole 3 dans la surface de vente.

Ces données représentatives d'une information associée à ladite étiquette électronique de gondole 3 peuvent prendre en compte des données spécifiques à l'utilisateur du terminal mobile 1, préalablement stockées dans une base de données 41, 44 accessible par un réseau de communication.

Par exemple, une base de données 41 peut comprendre une liste de course préalablement définie par l'utilisateur, et la base de données 44 peut comprendre des données de santé entrées par l'utilisateur, au moyen desquelles des informations sur des articles peuvent être mises en correspondance avec des informations personnelles, par exemple des contre-indications médicales telle que la présence d'allergènes spécifiés par l'utilisateur et résidente sur son terminal mobile.

D'autres bases de données 42, 43 peuvent être utilisées, et comprendre notamment le planogramme, des informations relatives aux articles, relatives à la surface de vente, etc...

Ainsi, l'étiquette électronique de gondole 3 peut être utilisée comme un capteur de contexte, puisqu'elle permet de déterminer le contexte du terminal mobile 1 avec lequel elle est en communication, notamment spatial, temporel, et d'usage du terminal.

On peut dès lors prévoir de délivrer au terminal mobile 1 des informations relatives à l'article à proximité duquel se trouve le terminal mobile 1, et donc l'utilisateur dudit terminal mobile, notamment des fiches techniques, des recettes de cuisine ou encore une proposition de produit de substitution ou des offres promotionnelles complémentaires.

On peut également prendre en compte les articles dont les identifiants d'étiquettes associés ont été acquis par le terminal mobile 1, par exemple pour afficher le prix total desdits articles lors d'une session d'achat.

On peut aussi prévoir de mettre à jour une liste de courses au fur et à mesure de l'acquisition d'identifiants d'étiquettes associées à des articles de cette liste de course.

On peut également mettre en oeuvre un paiement sécurisé au moyen du terminal mobile 1 grâce au relevé des identifiants d'étiquettes électroniques de gondole 3 correspondant aux articles que l'utilisateur désire acheter. Il suffit alors d'une communication avec un système de paiement lorsque l'utilisateur quitte la surface de vente.

Dans un mode de réalisation préférentiel, à la suite de la réception (étape S2) de l'identifiant de périphérique radiofréquence associé à l'étiquette de gondole 3, et nonobstant l'émission ou non d'une requête primaire, le terminal mobile 1 émet (étape S7) une requête secondaire comportant une seconde information caractéristique dérivée dudit identifiant de périphérique radiofréquence à un serveur secondaire 5, ledit serveur secondaire 5 étant sélectionné sur la base d'une information d'enseigne préalablement disponible pour le terminal mobile 1.

Ainsi, si l'information d'enseigne disponible pour le terminal mobile 1, par exemple issue d'une précédente mise en oeuvre du procédé, est toujours valide, il n'y a pas à attendre la réponse du serveur primaire 2 à la requête primaire pour émettre la requête secondaire.

Par ailleurs, un utilisateur va typiquement acquérir, dans un laps de temps assez court, au moyen de son terminal mobile 1, plusieurs identifiants d'étiquette électronique de gondole appartenant à une même surface de vente, donc rattachée à une même enseigne de distribution. Il est alors préférable d'éviter l'émission de requêtes primaires puisque l'information d'enseigne indiquera la même indentification d'enseigne de distribution.

A cet effet, à la suite de la réception par le terminal mobile 1 de l'information d'enseigne associée à la première information caractéristique en réponse à la requête primaire, tel que décrit précédemment, le terminal mobile 1 émet directement des requêtes secondaires comportant des secondes informations caractéristiques dérivées d'identifiants d'étiquette au serveur secondaire 5 pour les identifiants d'étiquettes subséquemment reçus par le terminal mobile 1.

Comme expliqué plus haut, une nouvelle requête primaire n'est alors émise par le terminal qu'après qu'une durée déterminée se soit écoulée suite à une dernière interaction avec un serveur secondaire 5, par exemple la dernière réception par le terminal mobile 1 de données représentatives d'une information associée à un périphérique radiofréquence 36 en réponse à une requête secondaire.

De préférence, les identifiants d'étiquette subséquemment reçus par le terminal mobile 1 suite à la réception d'une information d'enseigne, et à partir desquels sont directement émis des requêtes secondaires, sont stockés dans une mémoire du terminal mobile 1, lesdits identifiants d'étiquette subséquemment reçus étant horodatés par l'association d'une information de temps à chacun desdits identifiants d'étiquette subséquemment reçus. Ces identifiants d'étiquette horodatés peuvent ensuite être transmis au serveur primaire 2 en même temps qu'une requête primaire, émise par la suite lorsque les conditions précitées sont remplies. Cet horodatage permet de connaître le parcours d'achat d'un utilisateur dans une surface de vente, et le stockage des identifiants d'étiquettes permet de mettre en oeuvre un système de paiement à partir de cette liste de course.

De la sorte, les échanges avec le serveur primaire 2 sont limités. En outre, l'application primaire n'est alors sollicitée que lors du début d'une session d'achat. Puisque les requêtes secondaires subséquentes sont directement générées par l'application secondaire, l'application primaire peut se contenter par exemple de l'enregistrement des identifiants d'étiquette évoqué plus haut. L'application primaire n'est alors réellement relancée qu'à l'expiration de la durée déterminée ou lorsqu'un serveur secondaire 5 retourne un échec en réponse à une requête secondaire.

## Revendications

1. Procédé de communication à un terminal mobile (1) de données représentatives d'une information associée à un périphérique radiofréquence dans une surface de vente munie d'une série de périphériques radiofréquences (36), chaque périphérique radiofréquence (36) étant identifié par un unique identifiant de périphérique radiofréquence qui lui est propre, ledit terminal mobile exécutant une application primaire et disposant de plusieurs applications secondaires chacune associée à une information d'enseigne,
ledit procédé comprenant au moins les étapes selon lesquelles :
- le terminal mobile (1) établit une communication (S1) par radiofréquence avec un périphérique radiofréquence (36),
- le terminal mobile (1) reçoit (S2) du périphérique radiofréquence (36) l'identifiant de périphérique radiofréquence dudit périphérique radiofréquence (36),
- l'application primaire génère une requête primaire (S4) comportant une première information caractéristique dérivée dudit identifiant de périphérique radiofréquence et le terminal mobile (1) émet ladite requête primaire à un serveur primaire (2),
- le terminal mobile (1) reçoit (S5) du serveur primaire (2) une information d'enseigne associée à ladite première information caractéristique en réponse à la requête primaire,
- l'application primaire démarre sélectivement une application secondaire en fonction de l'information d'enseigne associée à ladite première information caractéristique,
- l'application secondaire génère une requête secondaire comportant une seconde information caractéristique dérivée dudit identifiant de périphérique radiofréquence et le terminal mobile (1) émet (S7) ladite requête secondaire à un serveur secondaire (5), ledit serveur secondaire (5) étant sélectionné sur la base de l'information d'enseigne,
- le terminal mobile (1) reçoit (S9) du serveur secondaire (5) des données représentatives d'une information associée audit périphérique radiofréquence (36) en réponse à la requête secondaire.

2. Procédé selon la revendication précédente, dans lequel l'application secondaire est associée à une pluralité de serveurs secondaires (5), le serveur secondaire (5) destinataire de la requête secondaire étant sélectionné sur la base de l'information d'enseigne parmi la pluralité de serveurs secondaires (5) auxquels est associée l'application secondaire.

3. Procédé selon l'une des revendications précédentes, dans lequel l'identifiant de périphérique radiofréquence est un identifiant de l'étiquette mémorisé dans ledit périphérique radiofréquence.

4. Procédé selon l'une des revendications précédentes, dans lequel la première information caractéristique envoyée au serveur primaire (2) est l'identifiant d'étiquette, et la seconde information caractéristique envoyée au serveur secondaire (5) est l'identifiant d'étiquette.

5. Procédé selon l'une quelconque des revendications précédentes, dans lequel à la suite de la réception (S5) par le terminal mobile (1) de l'information d'enseigne associée à ladite première information caractéristique en réponse à la requête primaire, ledit terminal mobile (1) émet (S7) directement des requêtes secondaires comportant des secondes informations caractéristiques dérivées d'identifiants de périphériques radiofréquences au serveur secondaire (5) pour les identifiants de périphérique radiofréquence subséquemment reçus par le terminal mobile (1), et
l'émission d'une requête primaire est conditionnée au fait
- qu'une durée déterminée se soit écoulée depuis la dernière interaction entre le terminal mobile (1) et un serveur primaire (2) ou secondaire (5), ou
- qu'une requête secondaire n'a pas été satisfaite.

6. Procédé selon la revendication précédente, dans lequel si une durée déterminée est écoulée depuis la dernière interaction entre le terminal mobile (1) et un serveur secondaire (5) ou un serveur primaire (2), le terminal mobile (1) émet une requête primaire (S4) comportant une première information caractéristique dérivée d'un identifiant de périphérique radiofréquence au serveur primaire (2).

7. Procédé selon l'une des revendications 4 ou 5, dans lequel dans le cas où le terminal mobile (1) ne reçoit pas des données représentatives d'une information associée à un périphérique radiofréquence (36) en réponse à une requête secondaire, le terminal mobile (1) émet une requête primaire comportant une première information caractéristique dérivée dudit identifiant de périphérique radiofréquence au serveur primaire (2).

8. Procédé selon la revendication précédente, dans lequel nonobstant l'émission ou non d'une requête primaire, le terminal mobile (1) émet (S7) une requête secondaire comportant une seconde information caractéristique dérivée dudit identifiant de périphérique radiofréquence à un serveur secondaire (5), ledit serveur secondaire (5) étant sélectionné sur la base d'une information d'enseigne préalablement disponible pour le terminal mobile (1).

9. Procédé selon la revendication 3, dans lequel les identifiants de périphériques radiofréquences subséquemment reçus par le terminal mobile (1) sont stockés dans une mémoire dudit terminal mobile (1), lesdits identifiants de périphériques radiofréquences étant horodatés par l'association d'une information de temps à chacun desdits identifiants de périphériques radiofréquences subséquemment reçus.

10. Procédé selon la revendication précédente, dans lequel lesdits identifiants de périphériques radiofréquences horodatés sont ensuite transmis au serveur primaire (2) en même temps qu'une requête primaire.

11. Procédé selon l'une des revendications précédentes, dans lequel le terminal mobile (1) communique via le réseau internet avec le serveur primaire (2) pour l'émission de la requête primaire comportant la première information caractéristique et pour la réception de l'information d'enseigne associée à ladite première information caractéristique.

12. Procédé selon l'une des revendications précédentes, dans lequel le terminal mobile (1) communique via le réseau internet avec le serveur secondaire (5) pour l'émission d'une requête secondaire comportant la seconde information caractéristique et pour la réception des données représentatives d'une information associée audit périphérique radiofréquence (36).

13. Procédé selon l'une des revendications précédentes, dans lequel chaque périphérique radiofréquence (36) est associé de façon biunivoque à une étiquette électronique de gondole (3) d'une surface de vente, et dans lequel
- l'identifiant de périphérique radiofréquence est un identifiant d'étiquette;
- les données représentatives d'une information associée au périphérique radiofréquence (36) sont des données représentatives d'une information associée à l'étiquette électronique de gondole (3).

14. Produit programme d'ordinateur comprenant des instructions de code de programme pour l'exécution des étapes du procédé selon l'une des revendications précédentes, lorsque ledit programme est exécuté par un terminal mobile.

15. Terminal mobile (1) comprenant
- des moyens de communication par radiofréquence avec un périphérique radiofréquence (36),
- des moyens de communication avec au moins un serveur primaire (2) et au moins un serveur secondaire (5),
- des moyens de traitement de données,
ledit terminal mobile étant configuré pour exécuter une application primaire et disposer de plusieurs applications secondaires chacune associée à une information d'enseigne, et pour :
- établir une communication (S1) par radiofréquence avec un périphérique radiofréquence (36) d'une surface de vente munie d'une série de périphériques radiofréquence (36), chaque périphérique radiofréquence (36) étant identifié par un unique identifiant de périphérique radiofréquence qui lui est propre,
- recevoir (S2) du périphérique radiofréquence (36) l'identifiant de périphérique radiofréquence dudit périphérique radiofréquence (36),
- exécuter une application primaire générant une requête primaire (S4) comportant une première information caractéristique dérivée dudit identifiant de périphérique radiofréquence et émettre ladite requête primaire à un serveur primaire (2),
- recevoir du serveur primaire (2) une information d'enseigne associée à ladite première information caractéristique en réponse à la requête primaire,
- exécuter l'application primaire démarrant sélectivement une application secondaire en fonction de l'information d'enseigne associée à ladite première information caractéristique,
- exécuter l'application secondaire générant une requête secondaire comportant une seconde information caractéristique dérivée dudit identifiant de périphérique radiofréquence,
- émettre (S7) ladite requête secondaire à un serveur secondaire (5), ledit serveur secondaire (5) étant sélectionné sur la base de l'information d'enseigne,
- recevoir (S9) du serveur secondaire (5) des données représentatives d'une information associée audit périphérique radiofréquence (36) en réponse à la requête secondaire.

16. Système de communication comprenant:
- un terminal mobile (1) selon la revendication précédente,
- une série de périphériques radiofréquences (36), chaque périphérique radiofréquence (36) étant identifié par un unique identifiant de périphérique radiofréquence qui lui est propre, le terminal mobile (1) pouvant établir une communication avec chaque périphérique radiofréquence (36) pour acquérir l'identifiant de périphérique radiofréquence dudit périphérique radiofréquence (36),
- au moins un serveur primaire (2) ayant accès à une base de données (4) comprenant une pluralité de premières informations caractéristiques dérivées de chaque identifiant de périphérique radiofréquence, chacune desdites premières informations caractéristiques étant associée à une information d'enseigne, ledit serveur primaire (2) étant configuré pour communiquer, en réponse à une requête primaire comportant une première caractéristique, l'information d'enseigne associée à ladite première information caractéristique,
- au moins un serveur secondaire (5) ayant accès à une base de données (5) comprenant une pluralité de secondes informations caractéristiques dérivées d'identifiants de périphérique radiofréquence, chacune desdites secondes informations caractéristiques étant associée à des données représentatives d'une information associée à un périphérique radiofréquence, ledit serveur secondaire (5) étant configuré pour communiquer, en réponse à une requête secondaire comportant une seconde information caractéristique de ladite pluralité de secondes informations caractéristiques, les données représentatives d'une information auxquelles ladite seconde information caractéristique est associée.

## Patentansprüche

1. Verfahren zur Übermittlung von Daten, die eine Information darstellen, die einem Funkfrequenz-Peripheriegerät zugehörig sind, an ein mobiles Endgerät (1) in einer Verkaufsfläche, die mit einer Reihe von Funkfrequenz-Peripheriegeräten (36) versehen ist, wobei jedes Funkfrequenz-Peripheriegerät (36) durch einen eindeutigen Funkfrequenz-Peripheriegerätidentifikator, der ihm eigen ist, identifiziert wird, wobei das mobile Endgerät eine Primäranwendung ausführt und über mehrere Sekundäranwendungen verfügt, die einer Handelsketteninformationen zugehörig sind,
wobei das Verfahren mindestens die Schritte umfasst, gemäß denen:
- das mobile Endgerät (1) eine Funkfrequenzverbindung mit einem Funkfrequenz-Peripheriegerät (36) herstellt (S1),
- das mobile Endgerät (1) von dem Funkfrequenz-Peripheriegerät (36) den Funkfrequenz-Peripheriegerätidentifikator des Funkfrequenz-Peripheriegeräts (36) empfängt (S2),
- die Primäranwendung eine Primäranfrage erzeugt (S4), die eine erste charakteristische Information umfasst, die von dem Funkfrequenz-Peripheriegerätidentifikator abgeleitet wurde, und das mobile Endgerät (1) die Primäranfrage an einen Primärserver (2) sendet,
- das mobile Endgerät (1) von dem Primärserver (2) als Reaktion auf die Primäranfrage eine Handelsketteninformation empfängt (S5), die der ersten charakteristischen Information zugehörig ist,
- die Primäranwendung selektiv in Abhängigkeit von der Handelsketteninformation, die der ersten charakteristischen Information zugehörig ist, eine Sekundäranwendung startet,
- die Sekundäranwendung eine Sekundäranfrage erzeugt, die eine zweite charakteristische Information umfasst, die von dem Funkfrequenz-Peripheriegerätidentifikator abgeleitet wurde, und das mobile Endgerät (1) die Sekundäranfrage an einen Sekundärserver (5) sendet (S7), wobei der Sekundärserver (5) basierend auf der Handelsketteninformation ausgewählt wird,
- das mobile Endgerät (1) als Reaktion auf die Sekundäranfrage von dem Sekundärserver (5) Daten empfängt (S9), die eine Information darstellen, die dem Funkfrequenz-Peripheriegerät (36) zugehörig ist.

2. Verfahren nach dem vorhergehenden Anspruch, wobei die Sekundäranwendung mehreren Sekundärservern (5) zugehörig ist, wobei der Sekundärserver (5), der der Empfänger der Sekundäranfrage ist, basierend auf der Handelsketteninformation unter den mehreren Sekundärservern (5) ausgewählt wird, denen die Sekundäranwendung zugehörig ist.

3. Verfahren nach einem der vorhergehenden Ansprüche, wobei der Funkfrequenz-Peripheriegerätidentifikator ein Identifikator des Etiketts ist, der in dem Funkfrequenz-Peripheriegerät gespeichert ist.

4. Verfahren nach einem der vorhergehenden Ansprüche, wobei die erste charakteristische Information, die an den Primärserver (2) gesendet wird, der Etikettidentifikator ist und die zweite charakteristische Information, die an den Sekundärserver (5) gesendet wird, der Etikettidentifikator ist.

5. Verfahren nach einem der vorhergehenden Ansprüche, wobei das mobile Endgerät (1), nach dem Empfang (S5) der Handelsketteninformation, die der ersten charakteristischen Information zugehörig ist, durch das mobile Endgerät (1) als Reaktion auf die Primäranfrage, direkt Sekundäranfragen, die zweite charakteristische Informationen umfassen, die von Funkfrequenz-Peripheriegerätidentifikatoren abgeleitet werden, an den Sekundärserver (5) für die nachfolgend durch das mobile Endgerät (1) empfangenen Funkfrequenz-Peripheriegerätidentifikatoren sendet (S7) und,
die Sendung einer Primäranfrage von der Bedingung abhängt,
- dass eine bestimmte Dauer seit der letzten Interaktion zwischen dem mobilen Endgerät (1) und einem Primär- (2) oder Sekundärserver (5) verstrichen ist, oder
- dass eine Sekundäranfrage nicht erfüllt wurde.

6. Verfahren nach dem vorhergehenden Anspruch, wobei, wenn eine bestimmte Dauer seit der letzten Interaktion zwischen dem mobilen Endgerät (1) und einem Sekundärserver (5) oder einem Primärserver (2) verstrichen ist, das mobile Endgerät (1) eine Primäranfrage, die eine erste charakteristische Information umfasst, die von einem Funkfrequenz-Peripheriegerätidentifikator abgeleitet wurde, an den Primärserver (2) sendet (S4).

7. Verfahren nach einem der Ansprüche 4 oder 5, wobei in dem Fall, in dem das mobile Endgerät (1) keine Daten, die eine Information darstellen, die einem Funkfrequenz-Peripheriegerät (36) zugehörig ist, als Reaktion auf eine Sekundäranfrage empfängt, das mobile Endgerät (1) eine Primäranfrage, die eine erste charakteristische Information umfasst, die von dem Funkfrequenz-Peripheriegerätidentifikator abgeleitet wurde, an den Primärserver (2) sendet.

8. Verfahren nach dem vorhergehenden Anspruch, wobei das mobile Endgerät (1) ungeachtet der erfolgten oder nicht erfolgten Sendung einer Primäranfrage eine Sekundäranfrage, die eine zweite charakteristische Information umfasst, die von dem Funkfrequenz-Peripheriegerätidentifikator abgeleitet wurde, an einen Sekundärserver (5) sendet (S7), wobei der Sekundärserver (5) basierend auf einer Handelsketteninformation ausgewählt wird, die vorab für das mobile Endgerät (1) verfügbar ist.

9. Verfahren nach Anspruch 3, wobei die Funkfrequenz-Peripheriegerätidentifikatoren, die nachfolgend durch das mobile Endgerät (1) empfangen werden, in einem Speicher des mobilen Endgeräts (1) gespeichert werden, wobei die Funkfrequenz-Peripheriegerätidentifikatoren durch die Verknüpfung einer Zeitinformation mit jeder von den nachfolgend empfangenen Funkfrequenz-Peripheriegerätidentifikatoren zeitgestempelt werden.

10. Verfahren nach dem vorhergehenden Anspruch, wobei die zeitgestempelten Funkfrequenz-Peripheriegerätidentifikatoren anschließend gleichzeitig mit einer Primäranfrage an den Primärserver (2) übertragen werden.

11. Verfahren nach einem der vorhergehenden Ansprüche, wobei das mobile Endgerät (1) über das Internet mit dem Primärserver (2) für das Senden der Primäranfrage, die die erste charakteristische Information enthält, und für den Empfang der Handelsketteninformation, die der ersten charakteristischen Information zugehörig ist, mit dem Primärserver (2) kommuniziert.

12. Verfahren nach einem der vorhergehenden Ansprüche, wobei das mobile Endgerät (1) über das Internet mit dem Sekundärserver (5) für das Senden einer Sekundäranfrage, die die zweite charakteristische Information enthält, und für den Empfang von Daten, die eine Information darstellen, die dem Funkfrequenz-Peripheriegerät (36) zugehörig ist, mit dem Sekundärserver (5) kommuniziert.

13. Verfahren nach einem der vorhergehenden Ansprüche, wobei jedes Funkfrequenz-Peripheriegerät (36) auf eineindeutige Art und Weise einem elektronischen Verkaufsinseletikett (3) einer Verkaufsfläche zugehörig ist, und wobei
- der Funkfrequenz-Peripheriegerätidentifikator ein Etikettidentifikator ist;
- die Daten, die eine Information darstellen, die dem Funkfrequenz-Peripheriegerät (36) zugehörig sind, Daten sind, die eine Information darstellen, die dem elektronischen Verkaufsinseletikett (3) zugehörig ist.

14. Computerprogrammprodukt, das Programmcodebefehle für die Ausführung der Schritte des Verfahrens nach einem der vorhergehenden Ansprüche umfasst, wenn das Programm durch ein mobiles Endgerät ausgeführt wird.

15. Mobiles Endgerät (1), umfassend:
- Mittel zur Funkfrequenzkommunikation mit einem Funkfrequenz-Peripheriegerät (36),
- Mittel zur Kommunikation mit mindestens einem Primärserver (2) und mindestens einem Sekundärserver (5),
- Datenverarbeitungsmittel,
wobei das mobile Endgerät ausgestaltet ist, um eine Primäranwendung auszuführen und über mehrere Sekundäranwendungen zu verfügen, die jeweils einer Handelsketteninformation zugehörig sind, und zum:
- Herstellen (S1) einer Funkfrequenzkommunikation mit einem Funkfrequenz-Peripheriegerät (36) einer Verkaufsfläche, die mit einer Reihe von Funkfrequenz-Peripheriegeräten (36) versehen ist, wobei jedes Funkfrequenz-Peripheriegerät (36) durch einen eindeutigen Funkfrequenz-Peripheriegerätidentifikator, der ihm eigen ist, identifiziert wird,
- Empfangen (S2) des Funkfrequenz-Peripheriegerätidentifikators des Funkfrequenz-Peripheriegeräts (36) von dem Funkfrequenz-Peripheriegerät (36),
- Ausführen einer Primäranwendung, die eine Primäranfrage (S4) erzeugt, die eine erste charakteristische Information umfasst, die von dem Funkfrequenz-Peripheriegerätidentifikator abgeleitet wurde, und Senden der Primäranfrage an einen Primärserver (2),
- Empfangen einer Handelsketteninformation, die der ersten charakteristischen Information zugehörig ist, von dem Primärserver (2) als Reaktion auf die Primäranfrage,
- Ausführen der Primäranwendung, die selektiv eine Sekundäranwendung in Abhängigkeit von der Handelsketteninformation startet, die der ersten charakteristischen Information zugehörig ist,
- Ausführen der Sekundäranwendung, die eine Sekundäranfrage erzeugt, die eine zweite charakteristische Information umfasst, die von dem Funkfrequenz-Peripheriegerätidentifikator abgeleitet wurde,
- Senden (S7) der Sekundäranfrage an einen Sekundärserver (5), wobei der Sekundärserver (5) basierend auf der Handelsketteninformation ausgewählt wird,
- Empfangen (S9) von Daten, die eine Information darstellen, die dem Funkfrequenz-Peripheriegerät (36) zugehörig ist, von dem Sekundärserver (5) als Reaktion auf die Sekundäranfrage.

16. Kommunikationssystem, umfassend:
- ein mobiles Endgerät (1) nach dem vorhergehenden Anspruch,
- eine Reihe von Funkfrequenz-Peripheriegeräten (36), wobei jedes Funkfrequenz-Peripheriegerät (36) durch einen eindeutigen Funkfrequenz-Peripheriegerätidentifikator identifiziert wird, der ihm eigen ist, wobei das mobile Endgerät (1) eine Kommunikation mit jedem Funkfrequenz-Peripheriegerät (36) herstellen kann, um den Funkfrequenz-Peripheriegerätidentifikator des Funkfrequenz-Peripheriegeräts (36) zu erfassen,
- mindestens einen Primärserver (2), der Zugriff auf eine Datenbank (4) aufweist, die mehrere erste charakteristische Informationen umfasst, die von jedem Funkfrequenz-Peripheriegerätidentifikator abgeleitet wurden, wobei jede von den ersten charakteristischen Informationen einer Handelsketteninformation zugehörig ist, wobei der Primärserver (2) ausgestaltet ist, um als Reaktion auf eine Primäranfrage, die eine erste Charakteristik aufweist, die der ersten charakteristischen Information zugehörige Handelsketteninformation zu übermitteln,
- mindestens einen Sekundärserver (5) der Zugriff auf eine Datenbank (5) aufweist, die mehrere zweite charakteristische Informationen umfasst, die von Funkfrequenz-Peripheriegerätidentifikatoren abgeleitet wurden, wobei jede von den zweiten charakteristischen Informationen Daten zugehörig ist, die eine Information darstellen, die einem Funkfrequenz-Peripheriegerät zugehörig sind, wobei der Sekundärserver (5) ausgestaltet ist, um als Reaktion auf eine Sekundäranfrage, die eine zweite charakteristische Information von den mehreren zweiten charakteristischen Informationen umfasst, die Daten, die eine Information darstellen, denen die zweite charakteristische Information zugehörig ist, zu übermitteln.

## Claims

1. A method for communication to a mobile terminal (1) of data representative of a piece of information associated with a radiofrequency peripheral in a sales area having a series of radiofrequency peripherals (36), each radiofrequency peripheral (36) being identified by a unique radiofrequency peripheral identifier specific thereto, said mobile terminal executing a primary application and having several secondary applications each associated with a piece of store chain information,
said method comprising at least the following steps :
- the mobile terminal (1) establishes radiofrequency communication (S1) with a radiofrequency peripheral (36),
- the mobile terminal (1) receives (S2), from the radiofrequency peripheral (36), the radiofrequency peripheral identifier of said radiofrequency peripheral (36),
- the primary application generates a primary request (S4) including a first characteristic information derived from said radiofrequency peripheral identifier and the mobile terminal (1) transmits said primary request to a primary server (2),
- the mobile terminal (1) receives (S5), from the primary server (2), a piece of store chain information associated with said first characteristic information in response to the primary request,
- the primary application selectively starts a secondary application based on the piece of store chain information associated with said first characteristic information,
- the secondary application generates a secondary request including a second characteristic information derived from said radiofrequency peripheral identifier and the mobile terminal (1) transmits (S7) said secondary request to a secondary server (5), said secondary server (5) being selected based on the piece of store chain information,
- the mobile terminal (1) receives (S9), from the secondary server (5), data representative of a piece of information associated with said radiofrequency peripheral (36) in response to the secondary request.

2. The method according to the preceding claim, wherein the secondary application is associated with a plurality of secondary servers (5), the secondary server (5) receiving the secondary request being selected based on the piece of store chain information among the plurality of secondary servers (5) with which the secondary application is associated.

3. The method according to any one of the preceding claims, wherein the radiofrequency peripheral identifier is a label identifier stored in said radiofrequency peripheral.

4. The method according to any one of the preceding claims, wherein the first characteristic information sent to the primary server (2) is the label identifier, and the second characteristic information sent to the secondary server (5) is the label identifier.

5. The method according to any one of the preceding claims, wherein, after the mobile terminal (1) has received (S5) the piece of store chain information associated with said first characteristic information in response to the primary request, said mobile terminal (1) directly transmits (S7) secondary requests including second characteristic information derived from radiofrequency peripheral identifiers to the secondary server (5) for the radiofrequency peripheral identifiers subsequently received by the mobile terminal (1), and
transmitting a primary request depends on the fact
- that a determined duration has elapsed since the last interaction between the mobile terminal (1) and a primary (2) or secondary (5) server, or
- that a secondary request has not been satisfied.

6. The method according to the preceding claim, wherein, if a determined duration has elapsed since the last interaction between the mobile terminal (1) and a secondary (5) or primary (2) server, the mobile terminal (1) transmits a primary request (S4) including a first characteristic information derived from a radiofrequency peripheral identifier to the primary server (2).

7. The method according to any one of claims 4 or 5, wherein, in the case where the mobile terminal (1) does not receive data representative of a piece of information associated with a radiofrequency peripheral (36) in response to a secondary request, the mobile terminal (1) transmits a primary request including a first characteristic information derived from said radiofrequency peripheral identifier to the primary server (2).

8. The method according to the preceding claim, wherein, notwithstanding the emission or otherwise of a primary request, the mobile terminal (1) transmits (S7) a secondary request including a second characteristic information derived from said radiofrequency peripheral identifier to a secondary server (5), said secondary server (5) being selected based on a piece of store chain information previously available for the mobile terminal (1).

9. The method according to claim 3, wherein the radiofrequency peripheral identifiers subsequently received by the mobile terminal (1) are stored in a memory of said mobile terminal (1), said radiofrequency peripheral identifiers being time-stamped by the association of a time information with each of said subsequently received radiofrequency peripheral identifiers.

10. The method according to the preceding claim, wherein said time-stamped radiofrequency peripheral identifiers are then transmitted to the primary server (2) at the same time as a primary request.

11. The method according to any one of the preceding claims, wherein the mobile terminal (1) communicates via the Internet server with the primary server (2) for transmitting the primary request including the first characteristic information and for receiving the piece of store chain information associated with said first characteristic information.

12. The method according to any one of the preceding claims, wherein the mobile terminal (1) communicates via the Internet network with the secondary server (5) for transmitting a secondary request including the second characteristic information and for receiving data representative of a piece of information associated with said radiofrequency peripheral (36).

13. The method according to any one of the preceding claims, wherein each radiofrequency peripheral (36) is associated in a one-to-one manner with an electronic shelf label (3) of a sales area, and wherein
- the radiofrequency peripheral identifier is a label identifier;
- data representative of a piece of information associated with the radiofrequency peripheral (36) are data representative of a piece of information associated with the electronic shelf label (3).

14. A computer program product comprising program code instructions for executing the steps of the method according to any one of the preceding claims, when said program is executed by a mobile terminal.

15. A mobile terminal (1) comprising
- means for radiofrequency communication with a radiofrequency peripheral (36),
- means for communication with at least one primary server (2) and at least one secondary server (5),
- data processing means,
said mobile terminal being configured to execute a primary application and have several secondary applications each associated with a piece of store chain information, and to:
- establish radiofrequency communication (S1) with a radiofrequency peripheral (36) of a sales area having a series of radiofrequency peripherals (36), each radiofrequency peripheral (36) being identified by a unique radiofrequency peripheral identifier specific thereto,
- receive (S2), from the radiofrequency peripheral (36), the radiofrequency peripheral identifier of said radiofrequency peripheral (36),
- execute a primary application generating a primary request (S4) including a first characteristic information derived from said radiofrequency peripheral identifier and transmit said primary request to a primary server (2),
- receive, from the primary server (2), a piece of store chain information associated with said first characteristic information in response to the primary request;
- execute the primary application selectively starting a secondary application based on the piece of store chain information associated with said first characteristic information,
- execute the secondary application generating a secondary request including a second characteristic information derived from said radiofrequency peripheral identifier,
- transmit (S7) said secondary request to a secondary server (5), said secondary server (5) being selected based on the piece of store chain information,
- receive (S9), from the secondary server (5), data representative of a piece of information associated with said radiofrequency peripheral (36) in response to the secondary request.

16. A communication system comprising:
- a mobile terminal (1) according to the preceding claim,
- a series of radiofrequency peripherals (36), each radiofrequency peripheral (36) being identified by a unique radiofrequency peripheral identifier specific thereto, the mobile terminal (1) being able to establish communication with each radiofrequency peripheral (36) to acquire the radiofrequency peripheral identifier of said radiofrequency peripheral (36),
- at least one primary server (2) having access to a database (4) comprising a plurality of first characteristic information derived from each radiofrequency peripheral identifier, each of said first characteristic information being associated with a piece of store chain information, said primary server (2) being configured to communicate, in response to a primary request including a first characteristic information, the piece of store chain information associated with said first characteristic information,
- at least one secondary server (5) having access to a database (5) comprising a plurality of second characteristic information derived from radiofrequency peripheral identifiers, each of said second characteristic information being associated with data representative of a piece of information associated with a radiofrequency peripheral, said secondary server (5) being configured to communicate, in response to a secondary request including a second characteristic information among said plurality of second characteristic information, the data representative of a piece of information with which said second characteristic information is associated.
